# EUROPEAN PATENT SPECIFICATION

(11) **EP 0 292 294 B1**
(45) Date of publication and mention of the grant of the patent: **03.02.1993**
(21) Application number: 88304558.5
(22) Date of filing: 19.05.1988
(51) Int. Cl.: B01D 39/16, B01D 29/13

(54) **Cylindrical filter**
Zylindrisches Filter
Filtre cylindrique

(30) Priority: 19.05.1987 JP 122050/87
(43) Date of publication of application: 23.11.1988
(73) Proprietor: Chisso Corporation, Osaka-shi Osaka-fu (JP)
(72) Inventor: Abe, Morio, Yasu-gun Shiga-ken (JP)
(74) Representative: Lamb, John Baxter

(56) References cited:
- EP-A- 0 084 143
- DE-A- 2 440 998
- DE-A- 3 200 959
- DE-C- 2 356 353
- DE-U- 7 028 698
- US-A- 4 269 888
- US-A- 4 542 060
- US-A- 4 551 378

## Description

This invention relates to a cylindrical filter.

Currently commercially available cylindrical filters include those obtained by winding a cloth or a non-woven fabric in the form of a roll and bonding the roll by the action of heat or with a resin; and those obtained by winding a fibre bundle of cotton yarns, multifilaments, etc. onto a core material such as a perforated cylinder, etc. These latter will hereinafter often be referred to as wound filters, and among these, those using multifilaments have been widely used since they are convenient to produce.

In order to impart the desired mechanical strength to a wound filter, the fibre bundle should be wound up under a certain tension, so that it is difficult to obtain filters having broad gaps between the fibres. Particularly in the case where the fibre bundle is of multifilaments, since the respective single filaments constituting the multifilaments are made parallel, not only the gaps between single filaments but also those between the fibre bundles are liable to become narrow.

Thus when filters produced from such a fibre bundle are used, solid matter is liable to be caught only at parts of the filter close to the surface so that resistance to the passage of water rises in a relatively short time, that is the filtration life of the filter is short. In order to overcome this drawback, it may be possible to make the outer layer of the filter coarser and the inner layer finer, by, e.g., winding up the fibre bundle gradually or by stepwise reducing the tension from the beginning of the winding toward the end, or by using coarse fibres as the outer layer(s) of the filter. However, such processing steps are complex.

It is an object of the present invention to provide an improved wound cylindrical filter.

According to the invention there is provided a cylindrical filter prepared by a filament-winding process of winding up filaments onto a central core in a cylindrical form, bonding the filaments by melt-adhesion of the filaments and removing the resulting cylindrical filter from the central core, characterized in that the filter is composed of interlaced filaments, comprising 20% by weight or more of hot-melt adhesive composite filaments, said composite filaments being composed two components, having a melting point difference of 20°C or more therebetween, and having a plurality of interlaced portions per metre of the interlaced filaments, the interlacing strength of the interlaced portions being 135(mg)xT or more, having been wound up on said central core under a tension of 135(mg)xT or less, the contact points of the interlaced filaments being bonded by melt-adhesion of the low melting component of the composite filaments to integrate the interlaced filaments. (In the above T means the total tex of the filaments).

In the following description, reference will be made to the accompanying drawings in which:
Fig. 1 is a schematic view of apparatus used for filtration testing;
Fig. 2 shows the particle size distribution of carborundum No. 600; and
Figs. 3 to 5 each show a relationship between the amount of filter cake held and the pressure drop across a filter.

The hot-melt adhesive composite filaments used in the present invention are composite filaments having a plurality of components having a melting point difference of 20°C or more, preferably 25°C or more therebetween, arranged in a side-by-side, sheath-core type or island-in-sea arrangement so that the low melting point component of the composite filaments can be present at the surface of the filaments. If the melting point difference is less than 20°C, the permissible temperature range for heat treatment of the filter is narrow. As to the components of the composite filaments, examples of suitable high melting components are polyesters, polyamides, polypropylene, polyvinyl chloride, etc; and examples of suitable low melting components are low melting polyesters, low melting polyamides, low melting polypropylene, various polyethylenes, ethylene-vinylacetate copolymer, etc. The materials used for the composite filaments, their combinations, their tex and other conditions may be appropriately chosen depending on the intended end use of the filter (water permeability, heat resistance, pressure resistance, etc.). A single filament of the composite filaments preferably has a tex of about 0.111 to 11.1 T (tex).

The hot-melt adhesive composite filaments may be used alone as multifilaments, but they may also be used in admixture with other filaments, provided the mixture contains 20% by weight or more of the composite filaments. Examples of other kinds of filaments which may be employed are filaments of polyesters, polyamides, polyolefins, etc. having a melting point higher than that of the low melting point component of the composite filaments. If the multifilaments have crimps, the resulting filter has a large void between filaments, and hence crimped multifilaments are preferred. The crimps may be either spontaneous crimps or two or three-dimensional crimps which have been produced using a stuffing box and the like.

If the interlaced filaments comprise less than 20% by weight of the hot-melt adhesive composite filaments, the bonding points on the filaments are decreased in number with the risk of losing strength of the filter. The hot-melt adhesive composite filaments preferably form 30% by weight or more of the total filament.

In the present invention, the multifilaments are used in the form of interlaced filaments having two or more interlaced portions per metre of the interlaced filaments having an interlacing strength of 135(mg)xT or more, preferably 180(mg)xT or more, T being the total tex of the multifilament. Herein, the number of the interlaced portions is estimated by applying an initial load of 135(mg)xT to a sample of 1m long, then after one minute, attaching two gauge marks at 50 cm interval thereonto, removing the load, measuring the number of interlaced portions still present after the removal. This procedure is repeated with five samples the average value of the samples is calculated. The above-mentioned T refers to the total tex of the multifilaments, and in general, and that of 5.6 to 1,110 tex is preferred.

If the strength of the interlaced portions is less than 135(mg)xT, then, when the interlaced filaments are wound up in a cylindrical shape, the interlaced portions thereof are unlaced to be arranged in parallel, thereby decreasing the voids in the filter layer.

Various means may be used to impart the interlaced portions to the multifilaments, and thus, a conventional interlacing apparatus using a high pressure gas at room temperature or high temperatures may be employed. The interlaced filaments may be wound up under a tension of 135(mg)xT or less so as to give the desired thickness. If the winding-up tension exceeds 135(mg)xT, the interlaced portions are opened; whichis undesirable. If the core on which the filaments are wound up is a non-porous tube or rod, it is removed after forming the filter, but if it is a porous tube, it may be left in the filter.

The heat treatment for bonding the contact points of filaments is carried out by heating the interlaced filaments to a temperature between the melting points of the composite components of the composite filaments. This heat treatment may be carried out at the same time as the winding-up step or after the winding step. When heat treatment is carried out at the same time as the winding-up step, the process interlaced filaments may be wound up having passed through a heating chamber or the surface of the cylindrical material may be heated during winding-up. As the heat source, infrared rays, high temperature gases, etc. may be used. When heating is carried out after the winding-up step, this may be effected by passing high temperature gases through the cylindrical material from its outside toward its inside.

The interlaced filaments are constricted and thinned in the interlaced portions. In the present invention, the interlaced filaments are wound up in a state where the interlaced portions are not opened to form a filter, and voids corresponding to the interlaced portions are left behind over the whole of the filter layers; hence the resulting filter not only has a small pressure loss but also filament material, as described later is caught even at the inner portions of the filter layers so that the increase in pressure drop due to retention of filtered material is small and the filtration life becomes long. Further, since the filter of the present invention has bonds between filaments due to the low melting point component of the hot-melt composits filaments, the contact points are small and homogeneously dispersed over the whole of the filter and hence the void ratio and strength of the resulting filter are both high.

In order that the invention may be well understood, the following examples are given by way of illustration only. In the examples, the amount of material trapped by the filter, the pressure loss and the filtration accuracy were measured as follows.

### Amount of material trapped and pressure loss:

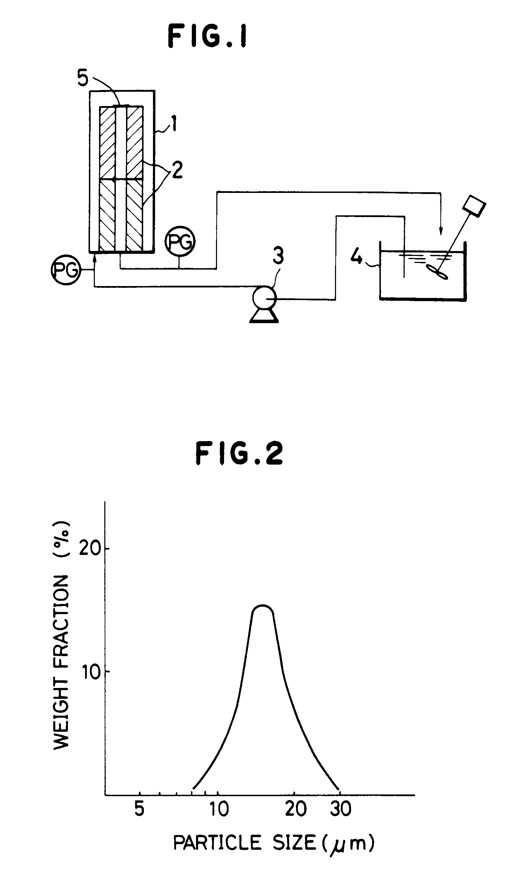

As shown in Fig. 1, two filters 2 were laid one on the other and fixed with a cover 5 in a housing 1, followed by measuring the pressure difference (pressure loss) between the inlet and exit of the filters while circulating water (35 litres/min.) by means of a pump 3, successively adding a solids dispersion (20mℓ; solids amoung 2g) into a water vessel 4, measuring the pressure loss when water in the water vessel has been clarified, and repeating the addition of the dispersion and the measurement of the pressure loss while continuing the circulating filtration to determine the amoun of solids (added amount of solids trapped) and the value of the pressure loss. The dispersion used was a suspension containing 10% by weight of a mixed powder consisting of 25% by weight of an activated carbon (Shirasagi C); content of particles having particle sizes of 43µm or less: 80% by weight), 50% by weight of abrasive powder (FO No. 1200, content of particles having particle sizes of 5 to 15ℓm : 90% by weight) and 25% by weight of carborundum (No.200, content of particles having particle size of 35 and 110 µm: 90% by weight).

### Filtration accuracy

Employing the same apparatus as shown in Fig. 1, one filter 2 is fixed with a cover 5 in the housing, followed by circulating water at a flow rate of 50 litres/min., adding 20g of solids (carborundum No. 600) into the water vessel, sampling filtered water (100mℓ) two minutes after addition of the solids, filtering it by means of a membrane filter capable of filtering out particles having particle sizes of 1µm or more, measuring the particle size of the solids caught on the membrane filter and calculating the filtering efficiency to each particle size based on the particle size distribution of the raw material. The minimum particle size for which the filtering efficiency was 75% or higher was defined as the filtration accuracy. The particle size distribution of the carborundum (No. 600) is shown in Fig. 2.

### Examples 1 to 3 and comparative example 1

A polyester as a core component and a high density polyethylene as a sheath component were composite melt-spun in a composite ratio of 50/50, followed by imparting three-dimensional crimps to the resulting hot-melt adhesion composite filaments to give multifilaments (tex of a single filament: 0.31 tex, number of filaments: 700 total tex: 217.6 tex) consisting of the composite filaments. The multifilaments were subjected to interlacing processing by means of an interlacer of the high pressure air ejection type to give interlaced filaments.

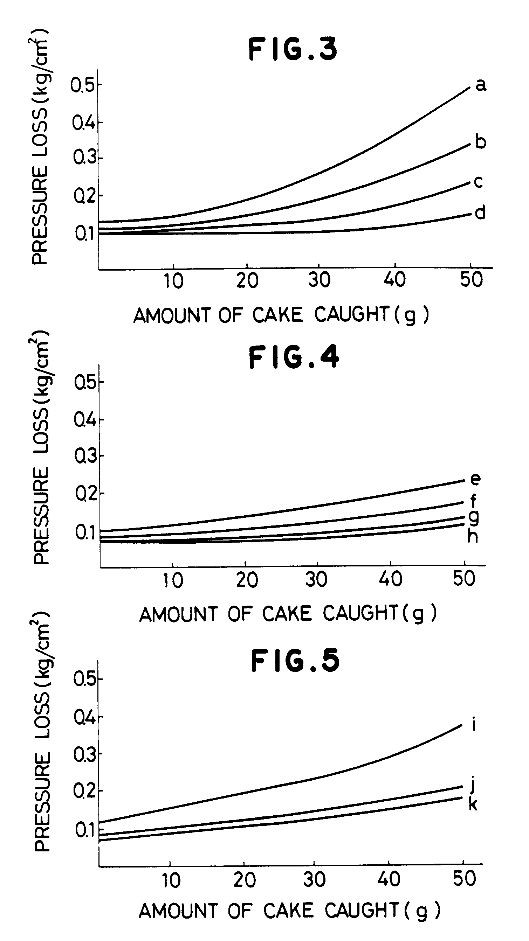

The interlaced filaments drawn from a creel were passed through a hot air-circulating heating chamber to heat-treat them. The heat-treated filaments were then wound up on a stainless steel pipe of 30 mm in diameter over a length of 300mm, winding one over another up to an outer diameter of 70 mm under a tension of 217.6 x 124 mg (≃ 27g). The resulting material was added to cool down after completion of the winding-up. The stainless steel pipe was then withdrawn and the ends of the material then cut off to give a cylindrical filter having a length of 250 mm, an outer diameter of 70mm, and inner diameter of 30mm, and a packing density of 0.28 to 0.29g/cm³. The filtrate properties of these filters are shown in Table 1 and Fig. 3.

**Table 1**

| | Interlaced Portion/m | Packing density (g/cm²) | Filtration acuracy (µm) | Initial pressure loss (kg/cm²) | Symbol in Fig.3 |
|---|---|---|---|---|---|
| Comp.ex.1 | 0 | 0.293 | 5 | 0.13 | a |
| Example 1 | 2 | 0.288 | 5 | 0.11 | b |
| Example 2 | 18 | 0.282 | 5 | 0.10 | c |
| Example 3 | 47 | 0.283 | 5 | 0.10 | d |

### Examples 4 to 6 and Comparative Example 2

Various filters were produced in the same manner as in Examples 1 to 3 except that the composite filaments were obtained by composite melt-spinning a propylene and a high density polyethylene in a composite ratio of 50/50 in a side-by-side manner, followed by imparting three-dimensional crimps to the resulting hot-melt-adhesive composite filaments. The resulting multifilaments (single filament tex; 1.99 tex; number of filaments: 120; total tex of the multifilament: 238.7 Tex) were used to prepare filter as described in Example 1, being wound up under a tension of 238.7 x 130.5 mg (ℓ 31g). The properties of these filters are shown in Table 2 and Fig. 4.

**Table 2**

| | Interlaced Portion/m | Packing density (g/cm²) | Filtration acuracy (µm) | Initial pressure loss (kg/cm²) | Symbol in Fig. 4 |
|---|---|---|---|---|---|
| Comp.ex.2 | 0 | 0.301 | 40 | 0.09 | e |
| Example 4 | 3 | 0.294 | 40 | 0.08 | f |
| Example 5 | 19 | 0.296 | 40 | 0.07 | g |
| Example 6 | 28 | 0.293 | 40 | 0.07 | h |

### Examples 7 and 8 and Comparative Example 3

Various filters were obtained in the same manner as Example 1 to 3 except that a polypropylene and a high density polyethylene were composite-melt-spun in a composite ratio of 50/50 in side-by-side manner, followed by imparting three-dimensional crimps to the resulting hot-melt-adhesive composite filaments to obtain multifilaments (tex of a single filament: 0.278: number of filaments:350; total tex of the multifilament:97.1 tex). These multifilaments were mixed and paralleled with polypropylene multifialments having three-dimensional crimps (tex of a single filament:0.386 tex, number of filaments:240; total tex of the multifilaments:93.2 tex) at a mixing ratio of 50/50, and the resulting mixed multifilaments were used to make the filter, being wound up under a of tension of 190.4 x 130.5 mg (ℓ 25g). The properties of these filters are shown in Table 3 and Fig. 5.

**Table 3**

| | Interlaced Portion/m | Packing density (g/cm²) | Filtration acuracy (µm) | Initial pressure loss (kg/cm²) | Symbol in Fig.5 |
|---|---|---|---|---|---|
| Comp.ex.3 | 0 | 0.290 | 10 | 0.12 | i |
| Example 7 | 14 | 0.284 | 10 | 0.09 | j |
| Example 8 | 52 | 0.282 | 10 | 0.08 | k |

As apparent from Tables 1 to 3 and Figs. 3 to 5, the cylindrical filters of the present are superior filter having a long filtration life.

## Claims

1. A cylindrical filter prepared by a filament-winding process of winding up filaments onto a central core in a cylindrical form, bonding the filaments by melt-adhesion of the filaments and removing the resulting cylindrical filter from the central core, characterized in that the filter is composed of interlaced filaments, comprising 20% by weight or more of hot-melt adhesive composite filaments, said composite filaments being composed of two components, having a melting point difference of 20°C or more therebetween, and having a plurality of interlaced portions per metre of the interlaced filaments, the interlacing strength of the interlaced portions being 135(mg)xT or more, having been wound up on said central core under a tension of 135(mg)xT or less, the contact points of the interlaced filaments being bonded by melt-adhesion of the low melting component of the composite filaments to integrate the interlaced filaments.

2. A filter according to claim 1 wherein the interlaced filaments are used only on the outer layer of said filter.

3. A filter according to any one of the preceding claims wherein the interlaced filaments comprise 30 to 100% by weight of hotmelt adhesive composite filaments.

4. A filter according to any one of the preceding claim wherein the strength of the interlaced filaments is 180(mg)xT or higher.

5. A filter according to any one of the preceding claims wherein the hot-melt adhesive composite filament is of a sheath-and-core, side-by-side or island-in-sea type.

6. A filter according to any one of the preceding claims wherein the components of the composite filaments consist of a high melting point component which is a polyester, polyamide, polypropylene or polyvinylchloride; and a low melting point component which is a low melting polyester, low melting polyamide, low melting polypropylene, polyethylene or ethylene-vinylacetate copolymer.

## Patentansprüche

1. Ein zylindrischer Filter, hergestellt durch einen Faden-Aufwickelvorgang unter Aufwickeln von Fäden auf einen zentralen Kern in einer zylindrischen Form, Verbinden der Fäden durch Schmelzverklebung der Fäden und Abnehmen des sich so ergebenden zylindrischen Filters von dem zentralen Kern,
**dadurch gekennzeichnet, daß**
der Filter aus verschlungenen Fäden zusammengesetzt ist, die 20 Gew.-% oder mehr an Fäden umfassen, welche aus Heißschmelzkleber zusammengesetzt sind, wobei diese zusammengesetzten Fäden aus zwei Bestandteilen bestehen, die einen Schmelzpunktunterschied von 20°C oder mehr zwischen sich haben, und eine Mehrzahl von verschlungenen Abschnitten pro Meter der verschlungenen Fäden aufweisen, wobei die Bindungsfestigkeit der verschlungenen Abschnitte 135 (mg)xT oder mehr ist, wenn die verschlungenen Fäden unter einer Spannung vom 135 (mg)xT oder weniger auf den zentralen Kern aufgewickelt wurden, wobei die Kontakpunkte der verschlungenen Fäden zur Integrierung der verschlungenen Fäden durch Schmelzverklebung des niedrigschmelzenden Bestandteils der zusammengesetzten Fäden verbunden sind.

2. Ein Filter nach Anspruch 1, bei dem die verschlungenen Fäden lediglich an der äußeren Schicht des Filters verwendet sind.

3. Ein Filter nach einem der voranstehenden Ansprüche, bei dem die verschlungenen Fäden 30 - 100 Gew.-% an zusammengesetzten Fäden aus Heißschmelzkleber umfassen.

4. Ein Filter nach einem der voranstehenden Ansprüche, bei dem die Festigkeit der verschlungenen Fäden 180 (mg)xT oder höher ist.

5. Ein Filter nach einem der voranstehenden Ansprüche, bei dem der zusammengestzte Faden aus Heißschmelzkleber vom Mantel-Seele-Typ, Seit-an-Seite-Typ oder Insel-im-Meer-Typ ist.

6. Ein Filter nach einem der voranstehenden Ansprüche, bei dem die Bestandteile der zusammengesetzten Fäden aus einer Komponente mit hohem Schmelzpunkt bestehen, die ein Polyester, Polyamid, Polypropylen oder Polyvinylchlorid ist; und aus einer Komponente mit niedrigem Schmelzpunkt, die ein niedrigschmelzender Polyester, ein niedrigschmelzendes Polyamid, ein niedrigschmelzendes Polypropylen, Polyäthylen oder Äthylenvinylacetatcopolymerisat ist.

## Revendications

1. Un filtre cylindrique préparé par un procédé d'enroulement de filaments, consistant à enrouler les filaments sur un noyau central sous une forme cylindrique, à lier les filaments par adhésion par fusion et à enlever le filtre cylindrique résultant du noyau central, caractérisé en ce que le filtre est composé de filaments entrelacés, comportant 20% en poids ou plus de filaments composites adhésifs thermofusibles, lesdits filaments composites étant composés de deux composantes, dont les points de fusion présentent une différence de 20°C ou plus, comportant plusieurs parties entrelacées par mètre de filaments entrelacés, la résistance d'entrelacement des parties entrelacées étant de 135 (mg) xT ou plus, l'enroulement sur ledit noyau central ayant été effectué en présence d'une tension de 135 (mg) xT ou moins, les points de contact des filaments entrelacés étant liés par adhésion par fusion de la composante à bas point de fusion des filaments composites en vue d'intégrer les filaments entrelacés.

2. Un filtre selon la revendication 1, dans lequel les filaments entrelacés sont utilisés uniquement sur la couche extérieure du dit filtre.

3. Un filtre selon l'une quelconque des revendications précédentes, dans lequel les filaments entrelacés comprennent 30 à 100% en poids de filaments composites adhésifs thermofusibles.

4. Un filtre selon l'une quelconque des revendications précédentes, dans lequel la résistance des filaments entrelacés est de 180 (mg) xT ou plus.

5. Un filtre selon l'une quelconque des revendications précédentes, dans lequel le filament composite adhésif thermofusible est du type enveloppe-et-noyau, côte à côte ou îlot en mer.

6. Un filtre selon l'une quelconque des revendications précédentes, dans lequel les composantes des filaments composites comportent une composante à point de fusion élevé, à savoir un polyester, un polyamide, un polypropylène ou un chlorure de polyvinyle et une composante à bas point de fusion, à savoir un polyester à bas point de fusion, un polyamide à bas point de fusion, un polypropylène à bas point de fusion, un polyéthylène ou un copolymère éthylène-acétate de vinyle.
